Europäisches Patentamt

European Patent Office

Office européen des brevets

(11) Veröffentlichungsnummer: **0 293 521**
**A2**

(12) **EUROPÄISCHE PATENTANMELDUNG**

(21) Anmeldenummer: 87201470.9

(22) Anmeldetag: 04.06.87

(51) Int. Cl.⁴ **C02F 3/30 , C02F 3/10**

(43) Veröffentlichungstag der Anmeldung:
07.12.88 Patentblatt 88/49

(84) Benannte Vertragsstaaten:
**ES**

(71) Anmelder: **GEBRÜDER SULZER AKTIENGESELLSCHAFT**
**Zürcherstrasse 9**
**CH-8401 Winterthur(CH)**

(72) Erfinder: **Gros, Henri, Dr.**
**Geiselweidstrasse 6**
**CH-8400 Winterthur(CH)**
Erfinder: **Kuhn, Hans**
**Schottikerstrasse 8**
**CH-8352 Elsau(CH)**
Erfinder: **Rey, Felix**
**Grenzstrasse 23**
**CH-8406 Winterthur(CH)**

(74) Vertreter: **Dipl.-Ing. H. Marsch Dipl.-Ing. K. Sparing Dipl.-Phys.Dr. W.H. Röhl**
**Patentanwälte**
**Rethelstrasse 123**
**D-4000 Düsseldorf 1(DE)**

(54) **Verfahren zur biologischen Reinigung von Wasser oder Abwasser von organischen stickstoffhaltigen verunreinigungen.**

(57) Um den anlagenseitigen Aufwand, insbesondere für die Rückspülung, für eine kombinierte Denitrifikations-Nitrifikationsstufe einer Wasseraufbereitungs- bzw. einer Abwasserreinigungsanlage zu verringern, werden als Träger für die Biomasse bei der Denitrifikation in einem Reaktor (1) körniges Filtermaterial (3) und bei der Nitrifikation in einem Reaktor (14) fixierte Trägerkörper (26) mit einer regelmässigen geometrischen Struktur, z.B. statische Mischelemente, verwendet.

EP 0 293 521 A2

# Verfahren zur biologischen Reinigung von Wasser oder Abwasser von organischen stickstoffhaltigen Verunreinigungen

Die Erfindung betrifft ein Verfahren zur biologischen Reinigung von Wasser oder Abwasser von organischen stickstoffhaltigen Verunreinigungen, bei dem das zu reinigende Rohwasser in einer ersten Stufe mit Hilfe von denitrifizierenden Mikroorganismen einer Denitrifikation und in einer zweiten Stufe mit Hilfe von nitrifixierenden Mikroorganismen einer Nitrifikation unterworfen wird, wobei die Mikroorganismen beider Stufen auf einem Trägermaterial gehalten werden, das für die Denitrifikation aus körnigem Filtermaterial besteht, wobei ferner ein Teil des behandelten Abwassers nach der Nitrifikation in die Denitrifikationsstufe zurückgeführt wird und das Trägermaterial in den Reaktoren beider Stufen intermittierend durch Rückspülen von Feststoff-Verunreinigungen und überschüssiger Biomasse gereinigt wird.

Neben vielen anderen Prozessen zur Entfernung des Stickstoffes aus Wasser und Abwasser mit einer kombinierten Denitrifikations-/Nitrifikationsanlage ist das vorstehend genannte Verfahren bekannt (P. Gilles et Y. Bourdon: "Nitrification-Denitrification par bacteries fixées à la station d'épuration de Valbonne Sophia-Antipolis" in der Zeitschrift "L'EAU, L'INDUSTRIE, LES NUISANCES"93 (1985), S.53-57). Bei diesem erfolgt in zwei Reaktoren, die von dem zu behandelnden Wasser bzw. Abwasser nacheinander durchströmt werden, in der ersten Stufe eine Denitrifikation, bei der entsprechende Mikroorganismen Nitrat zu gasförmigem Stickstoff abbauen. Diese Organismen, die für den Abbau von oragnischen kohlenstoffhaltigen Verunreinigungen Sauerstoff benötigen, "gewinnen" diesen dabei - neben dem molekularen Sauerstoff - durch Spaltung von Nitrat- und evtl. Nitritionen, die ihnen mit aus der Nitrifikationsstufe rezirkuliertem Wasser bzw. Abwasser angeboten werden. Die Mikroorganismen sind dabei an ein Trägermaterial gebunden, das aus der körnigen Masse in einem Festbettreaktor besteht. Die in diesem Reaktor lebenden heterotrophen Mikroorganismen sind schnellwachsend; sie erzeugen daher nach relativ kurzer Zeit - beispielsweise innerhalb von 24 Stunden - einen erheblichen Druckabfall in dem körnigen Fest- oder Filterbett.

Das in der ersten Stufe behandelte Wasser oder Abwasser gelangt dann in die zweite oder Nitrifikationsstufe, in der durch andere, ebenfalls auf einem Trägermaterial gehaltene Mikroorganismen sogenannter Ammonium-Stickstoff ($NH_4$-N) zu Nitrit und dann zu Nitrat oxidiert wird. Der dafür benötigte Sauerstoff wird dabei in Form von Luft oder Reinsauerstoff in den Reaktor der Nitrifikationsstufe in eine Zwischenschicht des ebenfalls wiederum körnigen Trägermaterials im Gegenstrom zu dem von oben nach unten fliessenden Wasser bzw. Abwasser eingebracht. Auf diese Weise bildet das körnige Trägermaterial unterhalb des Niveaus für den Sauerstoffeintrag ein "Sand"-Filter für feste Verunreinigungen und Schwebstoffe, der die Filterwirkung des körnigen Materials der beiden Reaktionsstufen ergänzt. Wie bereits erwähnt, wird eine Teilmenge der die Nitrifikationsstufe verlassenden behandelten Flüssigkeit als "Sauerstoffquelle" in die Denitrifikation rezirkuliert. Bei den Mikroorganismen der Nitrifikations stufe handelt es sich um relativ langsam wachsende Arten.

Aus der Kombination der mit langsam wachsender Biomasse "besetzten" Nitrifikationsstufe und einem Sandfilter ergibt sich ein erheblicher apparativer Aufwand, der vor allem für die häufig notwendigen Rückspülungen erforderlich ist, bei denen anlagenseitig Vorbereitungen getroffen sein müssen, damit dabei keine Verluste an körnigem Trägermaterial und der darauf haftenden Biomasse bei der Nitrifikationsstufe eintritt.

Der Erfindung liegt die Aufgabe zugrunde, den energetischen und apparativen Aufwand für die Durchführung des geschilderten kombinierten Denitrifikations-/Nitrifikationsverfahren zu verringern. Diese Aufgabe wird erfindungsgemäss dadurch gelöst, dass

die Nitrifikation in einem Reaktor durchgeführt wird, bei dem die Biomasse auf Trägerkörpern mit regelmässiger geometrischer Struktur fixiert ist.

Geometrisch regelmässig strukturierte Träger für die Biomasse nehmen im Volumen der Nitrifikationsstufe nur einen Bruchteil desjenigen von körnigen Trägern an; dadurch - und durch das Fehlen des in die Nitrifikationsstufe "integrierten" Filters - sind die Verstopfungsmöglichkeiten bei dem neuen Verfahren erheblich verringert, was zu einer Reduzierung der notwendigen Anzahl an Spülphasen führt. Weiterhin sind die geometrischen Trägerelemente in dem Reaktor leicht zu fixieren; ihr Ausschwemmen beim Spülen kann daher auf einfache Weise verhindert werden.

Ein weiterer Vorteil des neuen Verfahrens besteht darin, dass die für das Durchfliessen einer bestimmten Wassermenge notwendige Reaktorfläche gegenüber derjenigen bei den bisherigen Verfahren verringert ist, woraus sich eine erhebliche Steigerung der maximalen hydraulischen Belastbarkeit, d.h. des pro $m^2$ und Stunde zu behandelnden Wasser- oder Abwasservolumens ergibt. Dadurch erhöhen sich auch die Freiheitsgrade - beispielsweise das Verhältnis Höhe zur Fläche -, die man bei der Dimensionierung einer solchen Anlage hat.

Die bei dem bekannten Verfahren als letzte Teilstufe vorgesehene Schwebstoffabscheidung erfolgt bei dem neuen Verfahren in der Denitrifikationsstufe mit Hilfe des Rezirkulationsstromes. Dies bringt keinen ins Gewicht fallenden Nachteil hinsichtlich des Rückspülaufwandes für die erste Stufe, da - wie eingangs erwähnt - der Denitrifikationsreaktor wegen der hohen und raschen Produktion von Biomasse auf alle Fälle häufig gespült werden muss. Selbstverständlich ist es jedoch auch möglich, das den Nitrifikationsreaktor verlassende Reinwasser einer nachgeordneten Filtrationsstufe zuzuführen.

Der Nitrit- und Nitrat-Abbau in der ersten Stufe kann intensiviert werden, wenn in dem ersten Reaktor in Fliessrichtung des Rohwassers ein Bereich vorgesehen ist, der in anoxischem Zustand gehalten wird, wobei man gegebenenfalls der ersten Stufe - falls sie von unten nach oben mit dem Wasser beschickt wird - am Ende dieses Bereichs ein molekularen Sauerstoff mindestens enthaltendes Gas zuführen kann. Reicht der aus Nitrit oder Nitrat frei zu setzende gebundene Sauerstoff für einen Abbau der kohlenstoffhaltigen Verunreinigungen in dem ersten Reaktor nicht aus, so emfiehlt sich, wenn der Denitrifikation eine Vorstufe vorgeschaltet wird, in der organischer Kohlenstoff durch Mikroorganismen abgebaut wird, oder wenn dem dem Denitrifikationsreaktor zufliessenden Wasser molekularen Sauerstoff mindestens enthaltendes Gas zugeführt wird.

Dabei ist es vorteilhaft, die Begasung in oder vor dem Denitrifikationsreaktor oder die Rezirkulation des nitrifizierten Wassers in Abhängigkeit von einer Kenngrösse für den Sauerstoffbedarf in der Denitrifikationsstufe, beispielsweise in Abhängigkeit von der Sauerstoffkonzentration im der Nitrifikationsstufe zufliessenden Wasser, zu regeln.

Die Filtrationswirkung der ersten Stufe für eine Schwebstoffabscheidung kann schliesslich verbessert werden, wenn dem Rohwasser Flockungs- und/oder Flockungshilfsmittel zudosiert werden. Weiterhin ist es selbstverständlich möglich, für das körnige Medium in der ersten Stufe unterschiedliche Materialien und/oder Körnungen zu verwenden, wobei sich besonders eine Mischung aus flüssige, organische Substanzen adsorbierenden und solche Substanzen nicht adsorbierenden Stoffen - beispielsweise in der Form eines Mischbettes aus Aktivkohle und Bims (CH-PS 653 978) - bewährt hat.

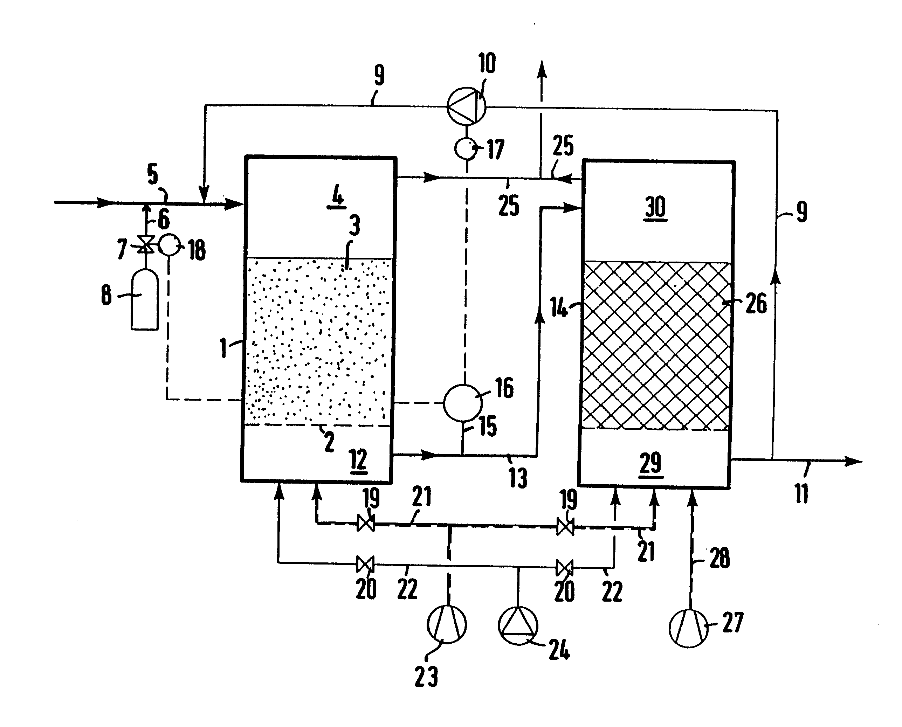

Im folgenden wird die Erfindung anhand eines Ausführungsbeispiels im Zusammenhang mit der Zeichnung näher erläutert.

Die einzige Figur zeigt eine Anlage zur Durchführung des neuen Verfahrens.

Der Reaktor 1 der ersten oder Denitrifikationsstufe ist teilweise mit einem Fest- oder Filterbett aus körnigem Material 3 gefüllt, das auf einem gas- und flüssigkeitsdurchlässigen Zwischenboden 2 gelagert ist. In den Ueberstauraum 4 des Festbettes mündet eine Zufuhrleitung 5 für das zu behandelnde Rohwasser. Dieses ist bereits vorbehandelt und hat zumindest eine Anlage durchsetzt, in der Feststoff-Verunreinigungen abgeschieden worden sind; es ist jedoch auch möglich, dass das Rohwasser bereits eine biologische Vorstufe durchflossen hat, in der auf konventionelle Weise organische Schmutzstoffe - beispielsweise in einer Belebtschlammanlage - bereits abgebaut worden sind. In der Leitung 5 ist ein Anschluss 6 für eine durch ein Regelventil 7 regelbare Einspeisung von Sauerstoff oder von molekularen Sauerstoff enthaltendem Gas vorgesehen, was durch eine Gasflasche 8 angedeutet ist. Weiterhin wird dem zu behandelnden Rohwasser über eine Rezirkulationsleitung 9, in der eine in ihrer Leistung regelbare Pumpe 10 vorgesehen ist, vor seinem Eintritt in den Reaktor 1 die zweite oder Nitrifikationsstufe verlassendes Reinwasser als Rezirkulationswasser zugeführt. Die Rezirkulationsmenge beträgt dabei beispielsweise zwischen 100 und 500 % des zugeführten Rohwasserstromes.

Das Festbett im Reaktor 1, das - wie erwähnt - gleichzeitig als Filtermaterial und als Trägermaterial für die denitrifizierenden Mikroorganismen dient, besteht beispielsweise aus Bims mit einer Körnung von 2 - 6 mm; es ist jedoch auch möglich, ein anderes der als Filter- und Trägermaterial bekannten körnigen Substanzen zu verwenden, z.B. Aktivkohle oder eine Mischung aus Aktivkohle und Bims.

Unterhalb des Zwischenbodens 2 ist im Reaktor 1 ein Sammelraum 12 für das denitrifizierte Gut vorgesehen, von dem aus ein Verbindungsleitung 13 in einen Reaktor 14 für die zweite oder Nitrifikationsstufe führt. In dieser Leitung 13 ist eine Mess-Sonde 15 vorgesehen, mit der die Sauerstoffkonzentration in dem den Reaktor 1 verlassenden Strom gemessen wird; der Messwert der Sonde 15 gelangt auf einen Regler 16, von dem, falls erforderlich, Stellsignale zum Antrieb 17 der Pumpe 10 oder zum Stellorgan 18 für das Regelventil 7 gelangen, um den Mengenstrom rezirkulierten Wassers zu ändern oder die Vorbegasung in bzw. ausser Betrieb zu setzen oder zu variieren. Beide Regelmöglichkeiten, von denen im allgemeinen pro Anlage eine ausreichend ist, arbeiten so, dass in der Leitung 13 immer eine minimale Konzentration an molekularem Sauerstoff von beispielsweise 0,1 mg/l vorhanden ist.

In den Sammelraum 12 münden weiterhin mit Absperrorganen 19 und 20 versehene Zuleitungen 21 und 22, über die durch einen Verdichter 23 bzw. durch eine Pumpe 24 Rückspülluft bzw. Rückspülwasser für eine konventionelle Rückspülung des Filtermaterials 3 zugeführt werden. Verschmutztes Rückspülwasser verlässt den Reaktor 1 durch eine Leitung 25, die aus dem Ueberstauraum 4 des Reaktors 1 wegführt und gleichzeitig als Abblasleitung für gasförmige Reaktionsprodukte dient.

Selbstverständlich ist es möglich, die Durchsatzrichtung des zirkulierenden Wassers im Reaktor 1 umzukehren, d.h. durch ein Einmünden der Leitung 5 unterhalb und ein Abzweigen der Leitung 13 oberhalb des Festbettes das Wasser von unten nach oben durch das Festbett fliessen zu lassen.

Die Leitung 13 mündet in einen Ueberstauraum 30, aus dem Schlammwasser und/oder gasförmige Reaktionsprodukte ebenfalls durch eine Leitung 25 abfliessen. Da die Leitung 13 oben in den Reaktor 14 einmündet, durchströmt das in dem ersten Reaktor 1 behandelte Wasser die Einbauten 26 des zweiten Reaktors 14 in dem gezeigten Beispiel von oben nach unten. Der für die "Fütterung" der Mikroorganismen benötigte Sauerstoff wird in Form von Luft oder Reinsauerstoff mit Hilfe eines Verdichters 27 durch eine Leitung 28 in den Reinwassersammelraum 29 und im Reaktor 14 eingeblasen, durchsetzt die Einbauten 26 also im Gegenstrom zu dem behandelten Wasser. Selbstverständlich ist es auch möglich, die Luft und das behandelte Wasser im Gleichstrom durch die Einbauten 26 zu führen, wobei beide Ströme von unten nach oben fliessen.

Die Einbauten 26 als Trägerkörper für die Biomasse, die eine regelmässige geometrische Struktur haben, sind im vorliegenden Fall handelübliche statische Mischelemente mit einer spezifischen Oberfläche von 100 - 500 m²/m³ für die Mischung von gasförmigen und flüssigen Strömen; diese Mischelemente sind im Reaktor 14 beispielsweise mit einem Netz, das in Spülrichtung dahinter ausgespannt ist, fixiert. Statt der Mischelemente ist es auch möglich, ebenfalls handelsüblicheanorganische Kunststoff-Füllkörper von regelmässiger Struktur zu verwenden.

Für die Rückspülung des zweiten Reaktors 14 verbinden mit Absperrorganen 19 und 20 versehene Rückspülleitungen 21 und 22 den Sammelraum 29 dieses Reaktors 14 ebenfalls mit dem Verdichter 23 bzw. der Pumpe 24.

Das Reinwasser verlässt den Sammelraum 29 bzw. den Reaktor 14 durch eine Leitung 11, aus der die Rezirkulationsleitung 9 abzweigt. Dieses Reinwasser kann, wenn erforderlich, einer Nachbehandlung in einem Festbettfilter zur Abscheidung restlicher Schwebstoffe, beispielsweise einem Zwei-Schichten-Filter, zugeleitet werden.

Beispiels für eine Abwasserreinigung:

In einer Versuchsanlage der vorstehend beschriebenen Art fallen täglich $10^4$ m³ Abwasser an; der Reaktor 1 hat dabei ein Volumen von 300 m³, der Reaktor 14 ein solches von 600 m³.

Für die Belüftung des zweiten oder Nitrifikations-Reaktors 14 werden $3 \times 10^4$ m³ Luft täglich benötigt.

Die Rezirkulationsrate des Wassers aus dem Reaktor 14 in den Reaktor 1, die vom "Sauerstoffbedarf" im Reaktor 1 abhängig ist, beträgt 150 %, d.h. $1,5 \times 10^4$ m³ täglich.

Der Reaktor 1 benötigt eine Rückspülung täglich, während für den Reaktor 14 eine solche pro Woche aufgrund der geringen Verstopfungsgefahr der Mischelemente ausreicht.

Die mit dem neuen Verfahren in der beschriebenen Anlage erhaltenen Reinigungsleistungen ergeben sich aus folgender Tabelle:

|  | im Rohwasser | Reaktor 1 | Reaktor 14 |
|---|---|---|---|
| Schwebstoffe (kg/d) | 700 | 120 | 80 |
| Ammonium (kg N/d) | 150 | 140 | 25 |
| biochemischer Sauerstoffbedarf (kg $O_2$/d) | 1200 | 200 | 100 |
| Gesamtstickstoff (kg N/d) | 300 | 270 | 100 |

**Ansprüche**

1. Verfahren zur biologischen Reinigung von Wasser oder Abwasser von organischen stickstoffhaltigen Verunreinigungen, bei dem das zu reinigende Rohwasser in einer ersten Stufe mit Hilfe von denitrifizierenden Mikroorganismen einer Denitrifikation und in einer zweiten Stufe mit Hilfe von nitrifizierenden Mikroorganismen einer Nitrifikation unterworfen wird, wobei die Mikroorganismen beider Stufen auf einem Trägermaterial gehalten werden, das für die Denitrifikation aus einem körnigen Filtermateral besteht, wobei ferner ein Teil des behandelten Abwassers nach der Nitrifikation in die Denitrifikationsstufe zurückgeführt wird und das Trägermaterial in den Reaktoren beider Stufen intermittierend durch Rückspülen von Feststoff-Verunreinigungen und überschüssiger Biomasse gereinigt wird, dadurch gekennzeichnet, dass die Nitrifikation in einem Reaktor (14) durchgeführt wird, bei dem die Biomasse auf Trägerkörpern (26) mit regelmässiger geometrischer Struktur fixiert ist.

2. Verfahren nach Anspruch 1, dadurch gekennzeichnet, dass in dem ersten Reaktor (1) in Fliessrichtung des Rohwassers ein Bereich vorgesehen ist, der in anoxischem Zustand gehalten wird.

3. Verfahren nach Anspruch 2, dadurch gekennzeichnet, dass dem ersten Reaktor (1) am Ende des anoxischen Bereiches molekularen Sauerstoff mindestens enthaltendes Gas zugeführt wird.

4. Verfahren nach Anspruch 1, dadurch gekennzeichnet, dass der Denitrifikation eine Vorstufe vorgeschaltet wird, in der organischer Kohlenstoff durch Mikroorganismen abgebaut wird.

5. Verfahren nach Anspruch 1, dadurch gekennzeichnet, dass ein Teil des körnigen Materials in dem ersten Reaktor (1) im Zustand eines Fliessbettes gehalten wird.

6. Verfahren nach Anspruch 1, dadurch gekennzeichnet, dass das aus der Nitrifikationsstufe weggeführte Reinwasser einer nachgeordneten Filtrationsstufe zugeführt wird.

7. Verfahren nach Anspruch 1, dadurch gekennzeichnet, dass dem dem Denitrifikationsreaktor (1) zufliessenden Rohwasser molekularen Sauerstoff mindestens enthaltendes Gas zugegeben wird.

8. Verfahren nach einem der Ansprüche 1, 3 und 6, dadurch gekennzeichnet, dass die Rezirkulation des nitrifizierten Wassers oder die Begasung in oder vor der Denitrifikationsstufe in Abhängigkeit von einer Kenngrösse für den Sauerstoffbedarf im Denitrifikationsreaktor (1), beispielsweise in Abhängigkeit von der Sauerstoffkonzentration im dem Nitrifikationsreaktor (14) zufliessenden Wasser geregelt wird.

9. Verfahren nach Anspruch 1, dadurch gekennzeichnet, dass dem Rohwasser Flockungs- und/oder Flockungshilfsmittel zudosiert werden.

EP 0 293 521 A2